Europäisches Patentamt

(19) European Patent Office

Office européen des brevets

(11) **EP 0 739 757 A1**

## (12) EUROPEAN PATENT APPLICATION

(43) Date of publication:
30.10.1996 Bulletin 1996/44

(51) Int. Cl.$^6$: **B60C 11/00**

(21) Application number: **95308480.3**

(22) Date of filing: **27.11.1995**

(84) Designated Contracting States:
DE FR GB IT

(30) Priority: **24.04.1995 KR 9509592**

(71) Applicant: **HANKOOK TIRE MFG. CO., LTD.**
**Seoul (KR)**

(72) Inventors:
• **Han, Chung-Soo**
**Youseong-ku, Taejeon-Si (KR)**

• **Williams, Thomas A.**
**Akron, Ohio 44333 (US)**

(74) Representative: **Needle, Jacqueline**
**W.H. BECK, GREENER & CO**
**7 Stone Buildings**
**Lincoln's Inn**
**London WC2A 3SZ (GB)**

(54) **Tyre having reduced noise**

(57)    A tyre has optimized pitch lengths in order to reduce noise. The tyre has a tread with a number of kinds of base pitches around the circumference of the tyre, with the base pitches differing from each other in length. Where there are three base pitches, including a short pitch (S), a middle pitch (M) and a long pitch (L), the middle pitch (M) is arranged to have a length near to that of the short pitch (S) or of the long pitch (L). The noise of the tyre has a low amplitude and a wide band-width to give good noise reduction.

FIG.2

## Description

The present invention relates to a tyre having reduced noise.

It is known that tyre noise is generated, at least in part, by the impact of the tread block on the road surface, by vibration of the tread block as it leaves the footprint, by the vibration of the tyre structure, and includes a piping noise caused by the compressed air being moved through the tread pattern voids.

Tread pattern noise is known to depend, in part, on the first two mechanisms mentioned above, as well as on the rotation velocity of the tyre and to include the piping noise.

Techniques have been developed to distribute the pattern noise frequency generated by the tyre tread over a wide frequency band which is termed "white noise". One representative technique is to use base pitches, having different lengths, in which the pitch length is a measure of the length from one base pitch to the next adjacent base pitch in the circumferential direction of the tyre. A plurality of base pitches having different pitch lengths is conventionally referred to as a "pitch sequence." Typically, in a pitch sequence consisting of base pitches having three different lengths, the length of the middle pitch is designed as a median of the length of the short pitch and that of the long pitch.

An offensive sound would be generated if a pitch sequence were not used on the tyre and all tread blocks were the same size in the circumferential direction. The impacts of the tread blocks would all produce the same basic frequency content which would then produce an overall tonal noise when the tyre rotates at speed. Accordingly, the lengths of the pitches are designed to be different and generally three kinds of pitches are employed for economic reasons.

U.S. Patents Nos. 5,027,875, 5,062,461, and 5,314,551 disclose techniques for changing the width and/or sequence of the pitches including the length thereof to reduce the pattern noise.

In the pitch sequence of the tyre described in the background part of U.S. Patent No. 4,823,853 the lengths of almost all the middle pitches have equivalent ratios of pitch length to the short pitch lengths and to the long pitch lengths. That is, if the length of the short pitch is 1.00 and the length of the long pitch is 1.50, then the length of the middle pitch is designed to be 1.25 or around this value.

However, although many such efforts have been carried out as described above, the pattern noise remains a problem.

It is an object of the invention to seek to provide a tyre which has a better noise quality than a conventional tyre.

According to a first aspect of the present invention there is provided a reduced noise tyre having a tread which has at least two base pitches around its circumference, wherein the base pitches differ in length, and wherein two of the base pitches which are adjacent in their length do not differ in length by more than 20%.

In an embodiment, the tyre has a tread with at least three base pitches. Preferably, the shortest and next longest base pitches do not differ in length by more than 20%. Additionally and/or alternatively, the longest and next shortest base pitches do not differ in length by more than 20%.

The invention also extends to a tyre having reduced noise including a tread with at least three kinds of base pitches placed around the circumference of the tyre, the base pitches different from each other in length including a short length pitch, a middle length pitch and a long length pitch, wherein the length of the middle length pitch is 1.05-1.20 times of the length of the short length pitch.

The invention also extends to a tyre having reduced noise including a tread with at least three kinds of base pitches placed around the circumference of the tyre, the base pitches different from each other in length including a short length pitch, a middle length pitch and a long length pitch, wherein the length of the middle length pitch is 0.85-0.95 times of the length of the long length pitch.

According to a still further aspect of the present invention there is provided a tyre having reduced noise including a tread with at least three kinds of base pitches placed around the circumference of the tyre, the base pitches different from each other in the length including a short length pitch (S), a middle length pitch (M) and a long length pitch (L), wherein the length of said middle length pitch is in the range of the equation (1).

$$S < M \leqq S+a \text{ or } L-a \leqq M < L \tag{1}$$

where S, M and L mean the length of the short length pitch, the middle length pitch and the long length pitch, respectively, and $a=(L-S)/4$.

It is preferred that the length of the long length pitch is 1.50-1.70 times of the length of the short length pitch.

In addition, the pitch sequence preferably consists of only three kinds of base pitches, and the total pitch number on the tread may be in the range from 45-92.

Embodiments of the present invention will hereinafter be described, by way of example, with reference to the accompanying drawings, in which: -

Figure 1 is a partial planar view of a tyre tread having base pitches of three lengths;

Figure 2 is a graph showing the relation between the length ratio of the middle pitch to the small one and subjective ranking of the computer prediction results for the pitch sequence having various pitch numbers (a lower subjective ranking corresponds to lower noise);

Figure 3 is a graph showing computer simulation results for a tyre having a total pitch number of 57 and a first pitch sequence;

Figure 4 is a graph showing computer simulation results for a tyre having a total pitch number of 57, and a second, alternative pitch sequence;

Figure 5 is a graph showing computer simulation results for a tyre having a total pitch number of 63 and a third pitch sequence;

Figure 6 is a graph showing computer simulation results for a tyre having a total pitch number of 85;

Figures 7 to 9 are graphs showing the relation between harmonics and amplitudes for tyres of the invention having total pitch numbers of 51, 63 and 85 as compared to substantially conventional tyres; and

Figures 10 to 12 are graphs showing results verifying the computer simulation results in Figures 7 to 9 in an Anechoic room.

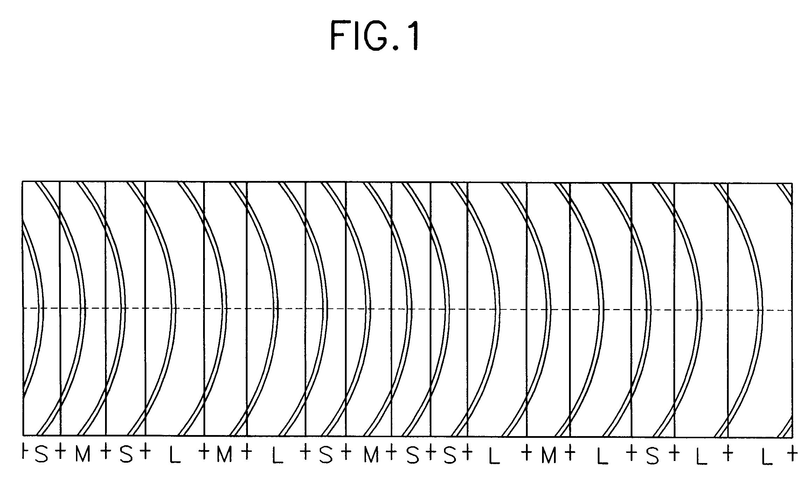

Figure 1 is a partial planar view of a tyre tread having base pitches of three lengths. In this figure, base pitches consist of a short length pitch (S), a middle length pitch (M) and a long length pitch (L). It will be noted that the tread is formed by repeating these base pitches non-periodically.

After repeated experiments utilizing a computer simulation program, it has been found that the conventionally used typical pitch ratio in a tread does not have an optimized ratio for reducing pattern noise.

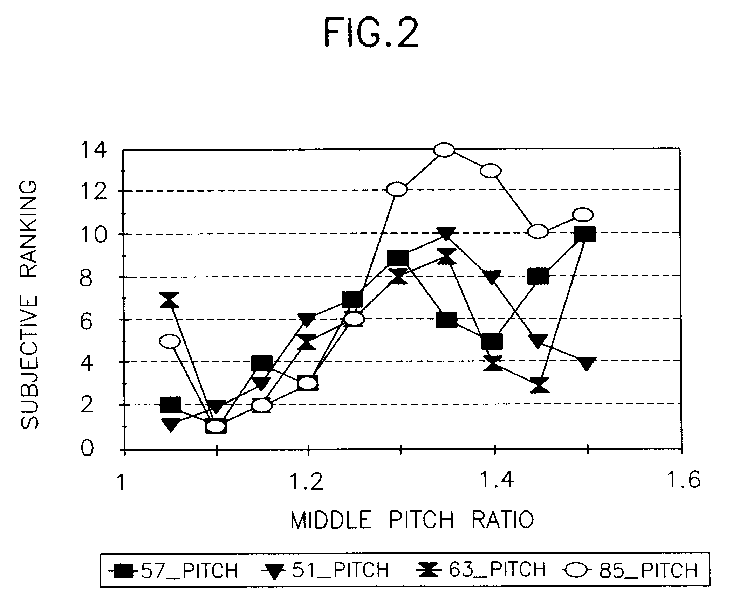

Figure 2 illustrates results which have been obtained by changing the length of the middle pitch from 1.05 to 1.50 times that of the short pitch with 0.05 times interval. The graph shows the relation between the length ratios of the middle pitches to the small ones and the subjective rankings of the computer modelling results for the various pitch numbers.

From the results in Figure 2, it will be seen that good noise reduction can be accomplished when the length of the middle pitch gets closer to the length of the short pitch in tyres having various total pitch numbers. It can be seen that the reason why a positive effect is obtained when the length of the middle pitch is 1.4 times or over the length of the short pitch. If the middle pitch length is 1.4 times or more, the length of the middle pitch gets closer to the length of the long pitch. That is, the effect of reducing noise can be obtained when the length of the middle pitch is closer to the length of the short pitch or to that of the long pitch. However, the effect obtained when the length of the middle pitch is closer to the length of the short pitch is superior to that obtained when the length of the middle pitch is closer to the length of the long pitch.

Considering the above results, it has been found that good noise reduction may be obtained for a tyre having a tread with at least three kinds of base pitches which are different from each other in length including a short length pitch (S), a middle length pitch (M) and a long length pitch (L), when the length of each pitch is in the range defined by:

$$S < M \leqq S+a \text{ or } L-a \leqq M < L \qquad (1)$$

where S, M and L are the lengths of the short length pitch, the middle length pitch and the long length pitch, respectively, and a=(L-S)/4.

When the length of the middle pitch is closer to the length of the short pitch, the preferred middle pitch length for obtaining good noise reduction is 1.05-1.20 times the short pitch length and the more preferred ratio is 1.10 times. When the length of the middle pitch is closer to the length of the long pitch, the preferred middle pitch length for obtaining good noise reducing effect is 0.85-0.95 times the long pitch length and the more preferred ratio is 0.90 times.

In the case of 4 kinds of base pitches, the basic two concepts shown above would apply to both of the two middle pitches. The shorter of the two middle pitches (M) would have a length between 1.05-1.20 times the short pitch length and the longer middle pitch (M') would have a length between 0.85 to 0.95 times the length of the long pitch length. The preferred lengths of the middle pitches would be 1.10 times the short pitch length and 0.90 times the long pitch length.

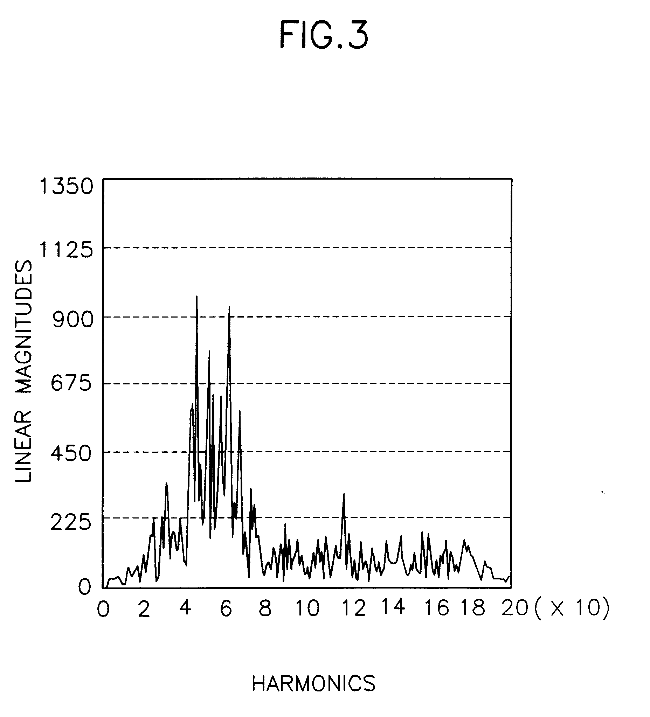

Figures 3 to 6 illustrate computer simulation results for tyres having base pitches according to the present invention and various total pitch numbers.

Figure 3 illustrates the computer simulation results obtained where the total pitch number of the tyre is 51, there are three kinds of base pitches, the length of the middle pitch is 1.10 times that of the short pitch, the length of the long pitch is 1.60 times that of the short pitch, and the pitch sequence is

SMSLMLSMSSLMLSLLLMLLMMMSLSMSLLMLLSLSMMSSSSMMSSSMSSM

(S=20, M=16, L=15). In this graph, the maximum linear amplitude is 881.20.

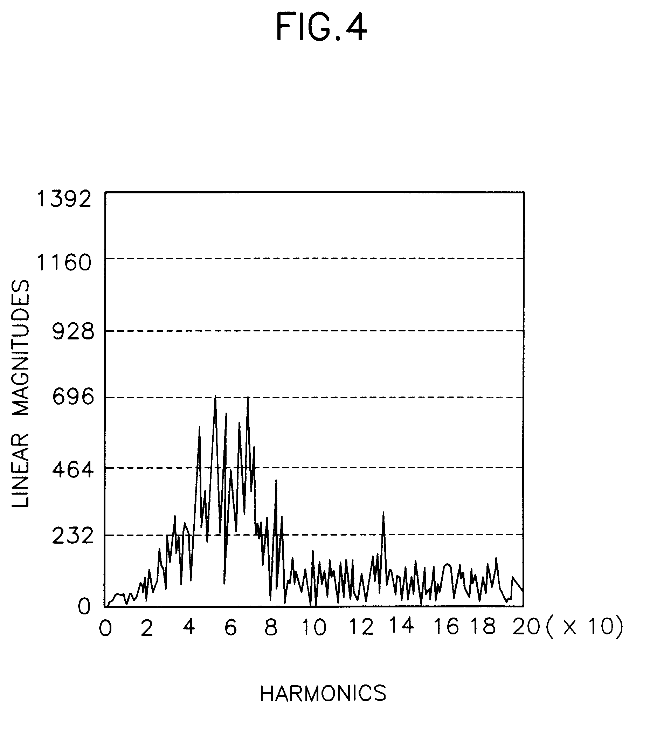

Figure 4 illustrates the computer simulation results obtained where the total pitch number of the tyre is 57, there are three kinds of base pitches, the length of the middle pitch is 1.10 times that of the short pitch, the length of the long pitch is 1.60 times that of the short pitch and the pitch sequence is

SLLSMLMMSMSSMSSLLSLSMLSMSSSMMSMLSLSLSLLSLLSLSSSSLLLLSSSLS

(S=27, M=10, L=20). In this graph, the maximum linear amplitude is 642.9.

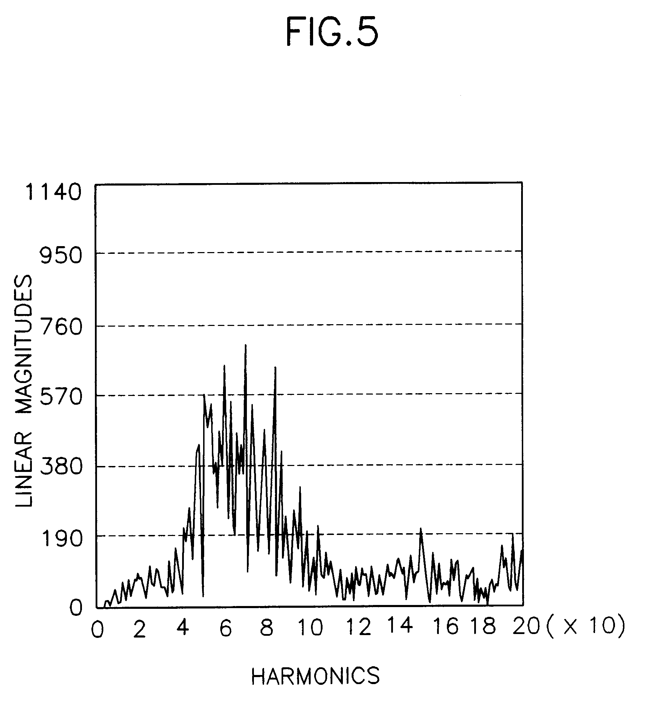

Figure 5 illustrates the computer simulation results obtained where the total pitch number of the tyre is 63, there are three kinds of base pitches, the length of the middle pitch is 1.10 times that of the short pitch, the length of the long pitch is 1.60 times that of the short pitch and the pitch sequence is

MLSMLSMSSLSSMSMLLLLMSLMMMSSSSSLSLLLSSLLSSSLLLLSSSLSSSLLLSLLLSSSO

(S=29, M=9, L=25). In this graph, the maximum linear amplitude is 651.6.

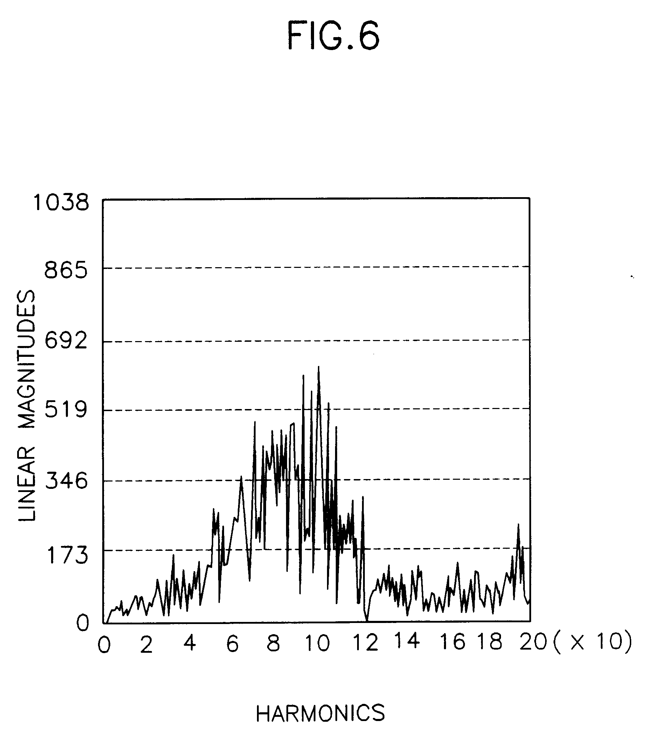

Figure 6 illustrates the computer simulation results obtained where the total pitch number of the tyre is 85, there are three kinds of base pitches, the length of the middle pitch is 1.10 times that of the short pitch, the length of the long pitch is 1.63 times that of the short pitch and the pitch sequence is

MMMMSSSMLLMSSMMMLLSMLLLSMMLMSLSLMSLMMSMSMSSLSLLMLSSMMLSMSL SMLMSLLLMSSLLSLLMMMSMMSMSSLO

(S=28, M=31, L=26). In this graph, the maximum linear amplitude is 566.5.

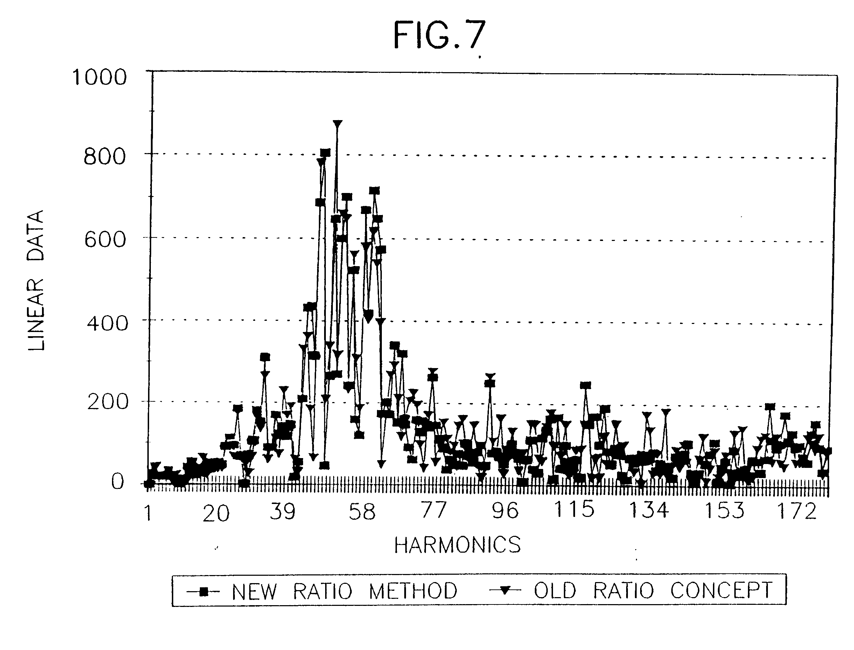

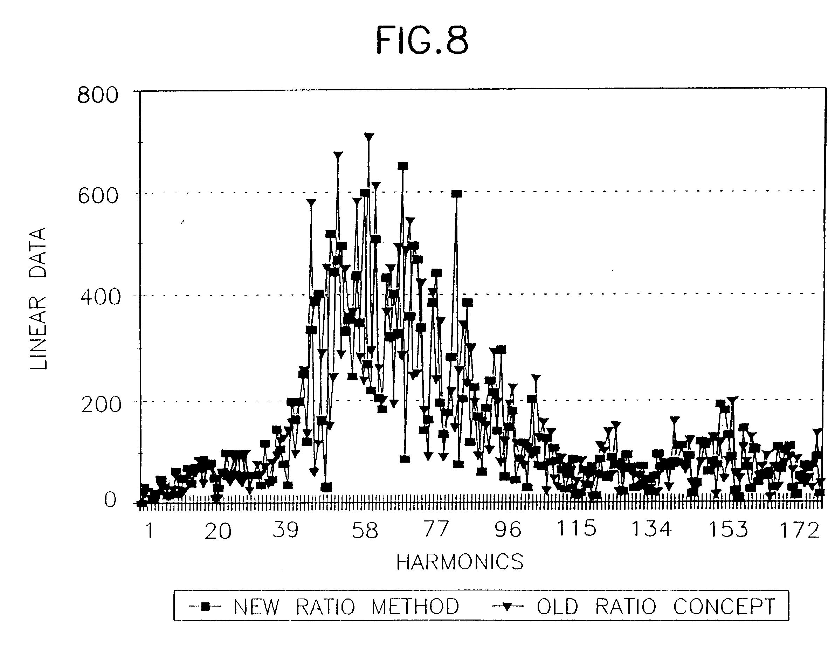

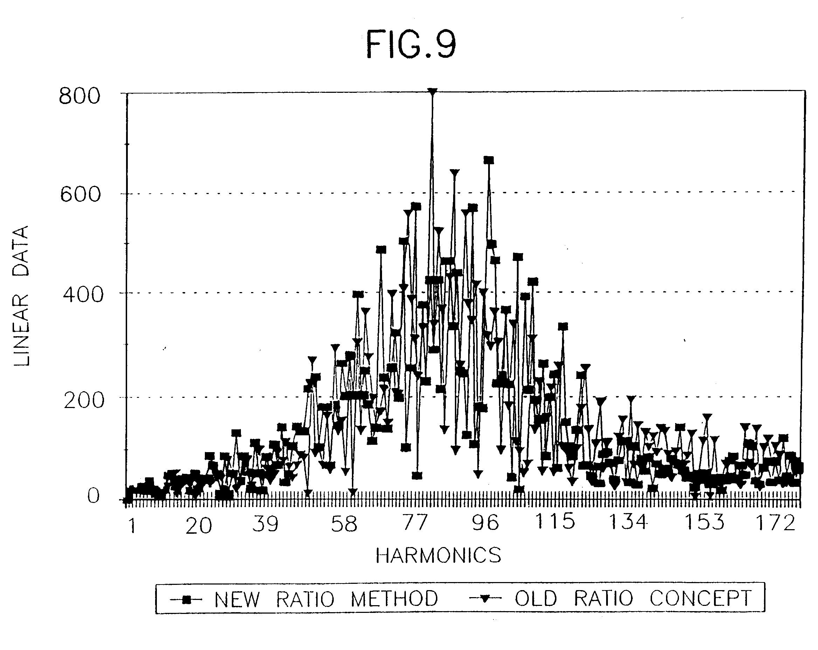

Figures 7-9 illustrate the relation between harmonics and amplitudes of computer models for tyres having total pitch numbers of 51, 63 and 85 and the middle pitch of which length is 1.10 times that of the short pitch in comparison with a conventional tyre having a middle pitch whose length is 1.25 times that of the short pitch. At this time, the length of the long pitch is 1.5 times that of the short pitch. In these graphs, the graphs shown by ■ represent results obtained according to the present invention and the graphs shown by ▼ represent results obtained by using the conventional tyre.

From these figures, it can be noted that the tyre of the present invention has a lower amplitude, i.e. lower sonic pressure and a wider bandwidth and is superior in reducing the pattern noise when compared with the conventional tyre.

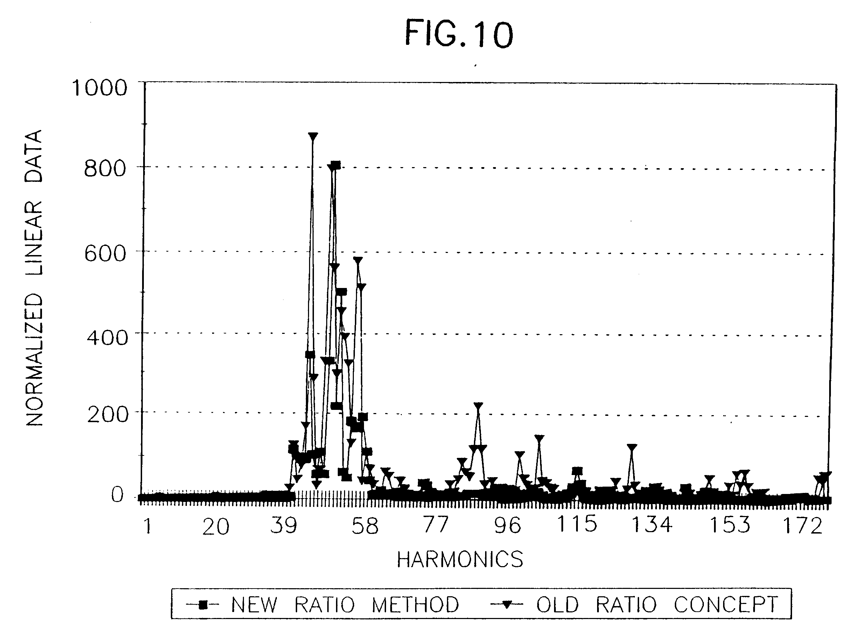

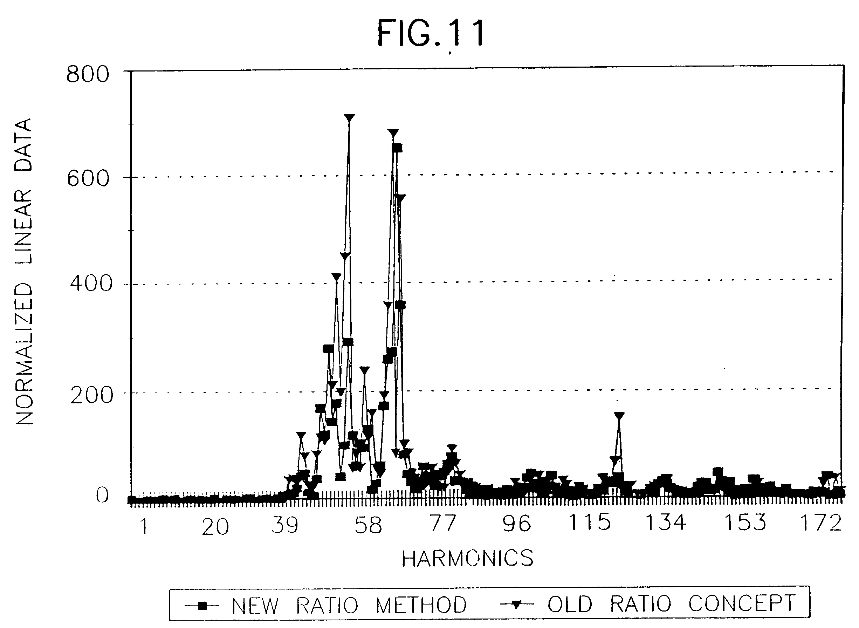

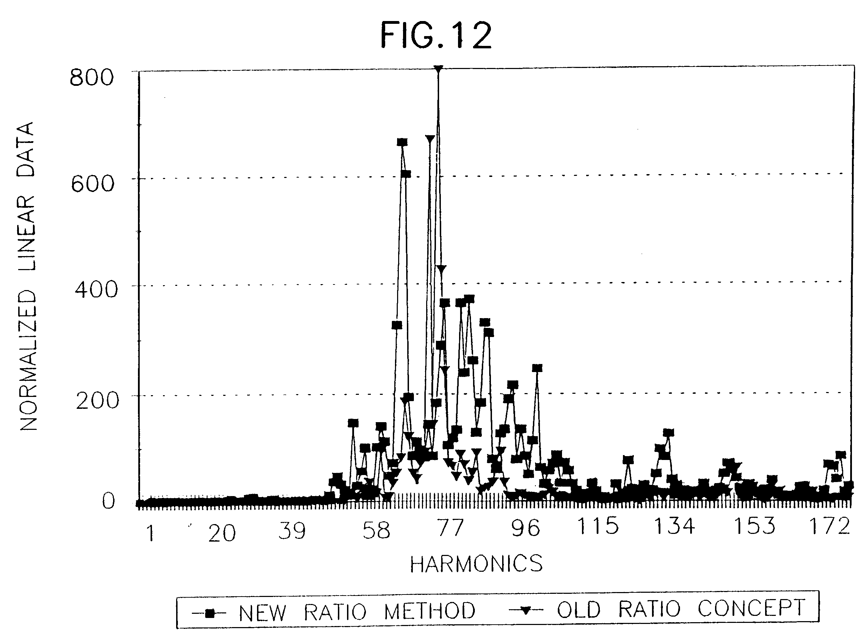

Figures 10-12 illustrate graphs showing results obtained by measuring average sound pressures with respect to each harmonic in an Anechoic room. These figures verify the superiority of a tyre of the invention when compared with a conventional tyre in reducing pattern noise.

From Figures 7-9 and Figures 10-12, it is confirmed that a tyre of the invention has a wider frequency range and a lower amplitude and so has a better noise characteristic than a conventional tyre.

When the length of the middle pitch is designed to be near the length of the short pitch or the long pitch as in a tyre of the invention, it is considered that energy transition is maximized at the boundaries between adjacent pitches during driving, and the tyre noise is relatively reduced. However, if the length of the middle pitch approaches that of either the short or long pitch too much, i.e. if the length of the middle pitch is 1.05 times or less the length of the short pitch, or is 0.95 times or more the length of the long pitch, and little difference between pitch lengths is given, offensive sound is periodically generated. Accordingly, a certain degree of length difference between the base pitches should be maintained not so as not to induce this side effect.

Further, if the length of the middle pitch is 1.20 times or more the length of the short pitch, or 0.85 times or less the length of the long pitch, energy transition effect between base pitches deteriorates and the noise reduction is not greatly enhanced. Considering the above points, the length of the middle pitch is preferably designed in the above mentioned ranges.

After repeated experiments, optimum results were obtained when the length of the long pitch was 1.50-1.70 times the length of the short pitch, while setting the length of the middle pitch in the ranges as described above.

In the case of the use of four base pitches among the above pitch sequences, the length of the middle pitch M is designed to be closer to the length of the short pitch S or the length of the middle pitch M' is designed to be closer to the length of the long pitch L.

Through various experiments as described above, a tyre has been provided which has reduced noise with optimized length ratios of the base pitches and has largely reduced pattern noise. The noise has been reduced by maximally reducing the pattern noise by spreading the frequency range of the noise and lowering the amplitude of the noise. Such a tyre will provide a quiet vehicle environment during driving.

The present invention has been described with reference to specific embodiments. However, the invention is not limited to those embodiments, and various changes and modifications may be made without departing from the scope of the invention as defined in the claims.

**Claims**

1. A reduced noise tyre having a tread which has at least two base pitches around its circumference, wherein the base pitches differ in length, and wherein two of the base pitches which are adjacent in their length do not differ in length by more than 20%.

2. A reduced noise tyre as claimed in Claim 1, having a tread with at least three base pitches, and wherein the shortest and next longest base pitches do not differ in length by more than 20%.

3. A reduced noise tyre as claimed in Claim 1 or Claim 2, having a tread with at least three base pitches, and wherein the longest and next shortest base pitches do not differ in length by more than 20%.

4. A tyre having reduced noise including a tread with at least three kinds of base pitches placed around the circumference of the tyre, said base pitches different from each other in the length, including a short length pitch, a middle length pitch and a long length pitch, wherein the length of said middle length pitch is 1.05-1.20 times the length of said short length pitch.

5. A tyre as claimed in Claim 4, wherein the length of said middle length pitch is 1.10 times the length of said short length pitch.

6. A tyre having reduced noise including a tread with at least three kinds of base pitches placed around the circumference of the tyre, said base pitches different from each other in the length including a short length pitch, a middle length pitch and a long length pitch, wherein the length of said middle length pitch is 0.85-0.95 times the length of said long length pitch.

7. A tyre as claimed in Claim 6, wherein the length of said middle length pitch is 0.90 times the length of said long length pitch.

8. A tyre as claimed in any preceding claim, wherein said pitches consist of only three kinds of base pitches.

9. A tyre as claimed in any preceding claim, wherein the length of said long length pitch is 1.50-1.70 times the length of said short length pitch.

10. A tyre as claimed in any preceding claim, wherein total pitch number on said tread is 45-92.

11. A tyre having reduced noise including a tread with at least three kinds of base pitches placed around the circumference of the tyre, said base pitches different from each other in the length including a short length pitch (S), a middle length pitch (M) and a long length pitch (L), wherein the length of said middle length pitch is in the range of the equation (1).

$$S < M \leqq S+a \text{ or } L-a \leqq M < L \qquad\qquad (1)$$

where S, M and L mean the length of the short length pitch, the middle length pitch and the long length pitch, respectively, and a=(L-S)/4)

## FIG.1

# FIG.2

# FIG.3

# FIG.4

# FIG.5

# FIG.6

# FIG.7

# FIG.8

EP 0 739 757 A1

# FIG.9

EP 0 739 757 A1

# FIG.10

EP 0 739 757 A1

# FIG.11

EP 0 739 757 A1

FIG.12

NEW RATIO METHOD ▪— OLD RATIO CONCEPT ▼—

HARMONICS

NORMALIZED LINEAR DATA

800  600  400  200  0

1  20  39  58  77  96  115  134  153  172

**European Patent Office**

## EUROPEAN SEARCH REPORT

Application Number

EP 95 30 8480

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN<br>vol. 009, no. 194 (M-403), 10 August 1985<br>& JP-A-60 060011 (SUMITOMO GOMU KOGYO KK),<br>6 April 1985,<br>* abstract * | 1-7 | B60C11/00 |
| X | EP-A-0 454 659 (SEMPERIT AG) 30 October 1991<br>* page 3 - page 5 * | 1-7,9 | |
| X | EP-A-0 542 493 (GEN TIRE INC) 19 May 1993<br>* claims 10,14 * | 1-4,6 | |
| D | & US-A-5 314 551 (WILLIAMS) | 1 | |
| X | EP-A-0 412 952 (SEMPERIT AG) 13 February 1991<br>* page 2, column 2, line 36 - line 45; claims * | 1-4,6,9 | |
| X | US-A-4 178 199 (CHUPA CHARLES M ET AL) 11 December 1979<br>* column 7, line 27 - line 38 * | 1-8 | TECHNICAL FIELDS SEARCHED (Int.Cl.6) |
| X,D | US-A-5 062 461 (NOGUCHI MAKOTO) 5 November 1991<br>* column 3 - column 5; claims * | 1-11 | B60C |
| A | EP-A-0 246 996 (THE GOODYEAR TIRE&RUBBER CO.) | 1-11 | |
| D | & US-A-4 823 853 (HITZKY) | 1-11 | |

The present search report has been drawn up for all claims

| Place of search | Date of completion of the search | Examiner |
|---|---|---|
| THE HAGUE | 5 August 1996 | Baradat, J-L |

EPO FORM 1503 03.82 (P04C01)